# EUROPEAN PATENT SPECIFICATION

(11) **EP 2 224 574 B1**
(45) Date of publication and mention of the grant of the patent: **28.12.2011**
(21) Application number: 09153670.6
(22) Date of filing: 25.02.2009
(51) Int. Cl.: H02J 7/00

(54) **Method and system for detection of counterfeit batteries**
Verfahren und System zur Erkennung von gefälschten Batterien
Procédé et système de détection de batteries de contrefaçon

(43) Date of publication of application: 01.09.2010
(60) Divisional application: 11190370.4
(73) Proprietor: RESEARCH IN MOTION LIMITED, Waterloo, Ontario N2L 3W8 (CA)
(72) Inventor: Winger, Lyall, Waterloo, Ontario N2L 3W8 (CA); Boda, Mallikarjun, Waterloo, Ontario N2L 5R9 (CA); Brubacher, Jonathan, Waterloo, Ontario N2L 5R9 (CA)
(74) Representative: Moore, Barry

(56) References cited:
- WO-A-2007/084601
- US-A1- 2003 102 842
- US-A1- 2006 208 850
- US-A1- 2007 214 296
- US-A1- 2008 007 647

## Description

The present disclosure relates generally to a portable electronic device including a system for detecting counterfeit battery packs, and a method of such detection.

Electronic devices, including portable electronic devices, are in widespread use and can provide a variety of functions including, for example, telephonic, electronic messaging and other personal information manager (PIM) application functions. Portable electronic devices can include several types of devices including mobile stations such as simple cellular telephones, smart telephones, wireless Personal Digital Assistants (PDAs), and laptop computers with wireless 802.11 or Bluetooth capabilities. These devices can include wireless communication capabilities, and can run on a wide variety of networks, from data-only networks such as Mobitex and DataTAC to complex voice and data networks such as GSM/GPRS, CDMA, EDGE, UMTS and CDMA2000 networks.

Portable electronic devices are typically supplied with a battery pack, which includes one or more cells forming a battery, for providing power to the device. Such battery packs typically include one or more cells, such as lithium-ion (Li-Ion) or lithium-ion polymer, nickel-cadmium (NiCd), or nickel-metal-hydride (NiMH) cells, and associated control circuitry. Emerging standards for wireless devices, such as the IEEE Livium™ 1725 "Standard for Rechargeable Batteries for Cellular Telephones", require that the charging of batteries be inhibited at a given temperature and that the discharging of batteries, such as during normal use, be inhibited at a somewhat higher temperature. Current battery temperature monitoring solutions use hardware, software, or firmware control means within the portable device and/or external charger to read the battery pack temperature in order to determine whether to begin charging a battery, to determine when to stop discharging the battery, and to monitor the battery for unsafe operating conditions that could lead to catastrophic thermal runaway, explosion or other hazardous outcomes.

In the market today there is an issue with counterfeit battery packs. These counterfeits not only result in legal liability and brand damage to companies, but also pose a potential threat to the consumer. There are several methods of fighting counterfeit battery use, but these methods often require additional processing circuitry, and none have proven particularly successful. For example, holograms are easily copied by counterfeiters, and secure authentication integrated circuits are easily compromised with new technologies. It is therefore desirable to provide an improved method and system for detecting, and preferably disabling, counterfeit or unauthorized battery packs.

US 2006208850 (A1) discloses a secondary battery protection circuit having a protection arrangement for protecting a secondary battery, by turning a discharge control switch and a charge control switch on and off, so as to prevent the secondary battery from overdischarging and overcharging. The secondary battery protection circuit further has a security arrangement for precluding counterfeit goods of a secondary pack. The security arrangement has an interface circuit for interfacing to a portable unit and an authentication circuit for calculating an identifier obtained by encrypting a random number received from the portable unit body to return the identifier to the portable unit body.

WO 2007084601 (A2) discloses multiple battery authentication security levels and procedures to alert a user of counterfeit or unapproved batteries that are installed after manufacture of the wireless communication device. In an exemplary battery authentication system, a mobile device sends a pre-stored plain text to a battery installed in the mobile device. An approved battery receives the plain text and performs an encryption algorithm on the plain text. Encrypted text is sent back to the mobile device. The mobile device compares the received encrypted text with a pre-stored encrypted text. If the received encrypted text matches the pre-stored encrypted text, then the battery is authenticated. Upon completion of the authentication of the installed battery, the mobile phone conducts normal battery and charging operation.; If the received encrypted text does not match the pre-stored encrypted text, then the device enters authentication failure events that limit the use of the battery.

In a preferred aspect there is provided in the following a method of detecting an unauthorized battery pack in a portable electronic device, comprising: monitoring a temperature profile of a battery during charging or discharging of the portable electronic device, the temperature profile determined in accordance with outputs periodically sensed at temperature monitoring terminals of a battery pack containing the battery; and providing an indication that the battery pack is an unauthorized battery pack in response to determining that the temperature profile is not within accepted tolerances of predetermined temperature characteristics associated with an authorized battery pack.

In other aspects there are provided a portable electronic device, comprising a temperature monitoring system, functional components comprising a processor connected to the temperature monitoring system, and a memory for storage of computer-readable program code executable by the processor for causing the portable electronic device to implement the steps of the method described above; and a computer-readable medium having computer-readable code embodied therein for execution by a processor of the portable electronic device for causing said portable electronic device to implement the steps of the method described above.

### BRIEF DESCRIPTION OF THE DRAWINGS

Embodiments of the present disclosure will now be described, by way of example only, with reference to the attached Figures, wherein:
Figure 1 is a block diagram of a portable electronic device according to one example;
Figure 2 is a block diagram of a battery pack and portable electronic device having a temperature monitoring system according to the prior art;
Figure 3 is a block diagram of a counterfeit battery pack and portable electronic device according to one embodiment;
Figure 4 is a flowchart of the method for detecting counterfeit battery packs; and
Figure 5 shows typical voltage and temperature curves for a battery during charging.

### DESCRIPTION OF PREFERRED EMBODIMENTS

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

The embodiments described herein generally relate to a portable electronic device and control of the portable electronic device to detect unauthorized or counterfeit battery packs. Examples of portable electronic devices include mobile, or handheld, wireless communication devices such as pagers, cellular phones, cellular smart-phones, wireless organizers, personal digital assistants, wirelessly enabled notebook computers and the like.

The portable electronic device may be a two-way communication device with advanced data communication capabilities including the capability to communicate with other portable electronic devices or computer systems through a network of transceiver stations. The portable electronic device may also have the capability to allow voice communication. Depending on the functionality provided by the portable electronic device, it may be referred to as a data messaging device, a two-way pager, a cellular telephone with data messaging capabilities, a wireless Internet appliance, or a data communication device (with or without telephony capabilities). The portable electronic device may also be a portable electronic device without wireless communication capabilities as a handheld electronic game device, digital photograph album, digital camera and the like.

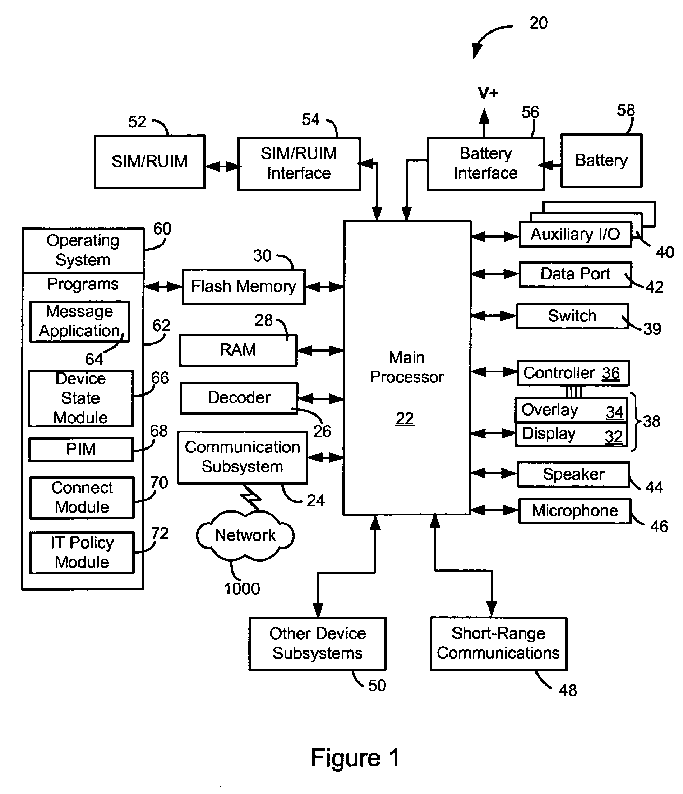

Referring first to Figure 1, there is shown therein a block diagram of an exemplary embodiment of a portable electronic device 20. The portable electronic device 20 includes a number of components such as the processor 22 that controls the overall operation of the portable electronic device 20. Communication functions, including data and voice communications, are performed through a communication subsystem 24. Data received by the portable electronic device 20 can be decompressed and decrypted by a decoder 26, operating according to any suitable decompression techniques (e.g. YK decompression, and other known techniques) and encryption techniques (e.g. using an encryption technique such as Data Encryption Standard (DES), Triple DES, or Advanced Encryption Standard (AES)). The communication subsystem 24 receives messages from and sends messages to a wireless network 1000. In this exemplary embodiment of the portable electronic device 20, the communication subsystem 24 is configured in accordance with the Global System for Mobile Communication (GSM) and General Packet Radio Services (GPRS) standards. The GSM/GPRS wireless network is used worldwide. New standards such as Enhanced Data GSM Environment (EDGE) and Universal Mobile Telecommunications Service (UMTS) are believed to have similarities to the network behavior described herein, and it will also be understood by persons skilled in the art that the embodiments described herein are intended to use any other suitable standards that are developed in the future. The wireless link connecting the communication subsystem 24 with the wireless network 1000 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 1000 associated with portable electronic device 20 is a GSM/GPRS wireless network in one exemplary implementation, other wireless networks may also be associated with the portable electronic device 20 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA1000 networks, GSM/GPRS networks (as mentioned above), and future third-generation (3G) networks like EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems. The processor 22 also interacts with additional subsystems such as a Random Access Memory (RAM) 28, a flash memory 30, a display 32 with a touch-sensitive overlay 34 that together make up a touch screen display 38, an electronic controller 36 connected to the touch-sensitive overlay 34, a switch 39, an auxiliary input/output (I/O) subsystem 40, a data port 42, a speaker 44, a microphone 46, short-range communications 48 and other device subsystems 50. The touch-sensitive overlay 34 and the electronic controller 36 provide a touch-sensitive input device and the processor 22 interacts with the touch-sensitive overlay 34 via the electronic controller 36.

Some of the subsystems of the portable electronic device 20 perform communication-related functions, whereas other subsystems may provide "resident" or on-device functions. By way of example, the display 32 and the touch-sensitive overlay 34 may be used for both communication-related functions, such as entering a text message for transmission over the network 1000, and device-resident functions such as a calculator or task list.

The portable electronic device 20 can send and receive communication signals over the wireless network 1000 after network registration or activation procedures have been completed. Network access is associated with a subscriber or user of the portable electronic device 20. To identify a subscriber according to the present embodiment, the portable electronic device 20 uses a SIM/RUIM card 52 (i.e. Subscriber Identity Module or a Removable User Identity Module) inserted into a SIM/RUIM interface 54 for communication with a network such as the network 1000. The SIM/RUIM card 52 is one type of a conventional "smart card" that can be used to identify a subscriber of the portable electronic device 20 and to personalize the portable electronic device 20, among other things. In the present embodiment the portable electronic device 20 is not fully operational for communication with the wireless network 1000 without the SIM/RUIM card 52. By inserting the SIM/RUIM card 52 into the SIM/RUIM interface 54, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM/RUIM card 52 includes a processor and memory for storing information. Once the SIM/RUIM card 52 is inserted into the SIM/RUIM interface 54, it is coupled to the processor 22. In order to identify the subscriber, the SIM/RUIM card 52 can include some user parameters such as an International Mobile Subscriber Identity (IMSI). An advantage of using the SIM/RUIM card 52 is that a subscriber is not necessarily bound by any single physical portable electronic device. The SIM/RUIM card 52 may store additional subscriber information for a portable electronic device as well, including datebook (or calendar) information and recent call information. Alternatively, user identification information can also be programmed into the flash memory 30. The portable electronic device 20 can also be enabled to receive additional memory cards. For example, memory card slots (not shown) can be provided in the portable electronic device 20 to receive such cards.

The portable electronic device 20 is a battery-powered device and includes a battery interface 56 for receiving a battery pack containing one or more rechargeable battery cells 58, and associated control circuitry (not shown) that, in some embodiments, can interface with the battery interface 56. The battery pack has a form factor and contact arrangement suited to the particular portable electronic device. In at least some embodiments, the battery 58 can be a smart battery with an embedded microprocessor. The battery interface 56 is coupled to a regulator (not shown), which assists the battery 58 in providing power V+ to the portable electronic device 20. Although current technology makes use of a battery, future technologies such as micro fuel cells may provide the power to the portable electronic device 20.

The portable electronic device 20 also includes an operating system 60 and software components 62 which are described in more detail below. The operating system 60 and the software components 62 that are executed by the processor 22 are typically stored in a persistent store such as the flash memory 30, which may alternatively be a read-only memory (ROM) or similar storage element (not shown). Those skilled in the art will appreciate that portions of the operating system 60 and the software components 62, such as specific software applications 64, 66, 68, 70 and 72, or parts thereof, may be temporarily loaded into a volatile store such as the RAM 28. Other software components can also be included, as is well known to those skilled in the art.

The subset of software components 62 that control basic device operations, including data and voice communication applications, will normally be installed on the portable electronic device 20 during its manufacture. Other software applications include a message application 64 that can be any suitable software program that allows a user of the portable electronic device 20 to send and receive electronic messages. Various alternatives exist for the message application 64 as is well known to those skilled in the art. Messages that have been sent or received by the user are typically stored in the flash memory 30 of the portable electronic device 20 or some other suitable storage element in the portable electronic device 20. In at least some embodiments, some of the sent and received messages may be stored remotely from the device 20 such as in a data store of an associated host system that the portable electronic device 20 communicates with.

The software components 62 can further include a device state module 66, a Personal Information Manager (PIM) 68, and other suitable modules (not shown). The device state module 66 provides persistence, i.e. the device state module 66 ensures that important device data is stored in persistent memory, such as the flash memory 30, so that the data is not lost when the portable electronic device 20 is turned off or loses power.

The PIM 68 includes functionality for organizing and managing data items of interest to the user, such as, but not limited to, e-mail, contacts, calendar events, voice mails, appointments, and task items. The PIM 68 has the ability to send and receive data items via the wireless network 1000. PIM data items may be seamlessly integrated, synchronized, and updated via the wireless network 1000 with the portable electronic device subscriber's corresponding data items stored and/or associated with a host computer system. This functionality creates a mirrored host computer on the portable electronic device 20 with respect to such items. This can be particularly advantageous when the host computer system is the portable electronic device subscriber's office computer system.

The software components 62 also include a connect module 70, and an information technology (IT) policy module 72. The connect module 70 implements the communication protocols that are required for the portable electronic device 20 to communicate with the wireless infrastructure and any host system, such as an enterprise system, that the portable electronic device 20 is authorized to interface with.

The connect module 70 includes a set of APIs that can be integrated with the portable electronic device 20 to allow the portable electronic device 20 to use any number of services associated with the enterprise system. The connect module 70 allows the portable electronic device 20 to establish an end-to-end secure, authenticated communication pipe with the host system. A subset of applications for which access is provided by the connect module 70 can be used to pass IT policy commands from the host system to the portable electronic device 20. This can be done in a wireless or wired manner. These instructions can then be passed to the IT policy module 72 to modify the configuration of the device 20. Alternatively, in some cases, the IT policy update can also be done over a wired connection.

Other types of software applications can also be installed on the portable electronic device 20. These software applications can be third party applications, which are added after the manufacture of the portable electronic device 20. Examples of third party applications include games, calculators, utilities, etc.

The additional applications can be loaded onto the portable electronic device 20 through at least one of the wireless network 1000, the auxiliary I/O subsystem 40, the data port 42, the short-range communications subsystem 48, or any other suitable device subsystem 50. This flexibility in application installation increases the functionality of the portable electronic device 20 and may provide enhanced on-device functions, communication-related functions, or both. For example, secure communication applications may enable electronic commerce functions and other such financial transactions to be performed using the portable electronic device 20.

The data port 42 enables a subscriber to set preferences through an external device or software application and extends the capabilities of the portable electronic device 20 by providing for information or software downloads to the portable electronic device 20 other than through a wireless communication network. The alternate download path may, for example, be used to load an encryption key onto the portable electronic device 20 through a direct and thus reliable and trusted connection to provide secure device communication.

The data port 42 can be any suitable port that enables data communication between the portable electronic device 20 and another computing device. The data port 42 can be a serial or a parallel port. In some instances, the data port 42 can be a USB port that includes data lines for data transfer and a supply line that can provide a charging current to charge the battery 58 of the portable electronic device 20.

The short-range communications subsystem 48 provides for communication between the portable electronic device 20 and different systems or devices, without the use of the wireless network 1000. For example, the short-range communications subsystem 48 may include an infrared device and associated circuits and components for short-range communication. Examples of short-range communication standards include standards developed by the Infrared Data Association (IrDA), Bluetooth, and the 802.11 family of standards developed by IEEE.

Synchronization of files and data between the portable electronic device 20 and another computing device can be achieved over the wireless network 1000, through the short-range communications system 48, or through a direct connection between the data port 42 of the portable electronic device 20 and the other computing device. Synchronization causes the most recent version of files and data to be mirrored on either the portable electronic device or the other computing device. As used herein, synchronization also refers to the downloading or uploading of pre-selected files from one device to the other. Synchronization of files and data can be initiated by the user of the device whenever a suitable connection between the portable electronic device 20 and another computing device, such as a home computer, is detected, or can occur automatically when a connection is detected. A synchronization application, stored in the portable electronic device 20 and/or the other computing device, can determine the file and data types to be synchronized, the frequency of synchronization, and other parameters, appropriate to the particular synchronization algorithm implemented by the synchronization application.

In use, a received signal such as a text message, an e-mail message, or web page download is processed by the communication subsystem 24 and input to the processor 22. The processor 22 then processes the received signal for output to the display 32 or alternatively to the auxiliary I/O subsystem 40. A subscriber may also compose data items, such as e-mail messages, for example, using the touch-sensitive overlay 34 on the display 32 that are part of the touch screen display 38, and possibly the auxiliary I/O subsystem 40. The auxiliary I/O subsystem 40 may include devices such as: a mouse, track ball, infrared fingerprint detector, or a roller wheel with dynamic button pressing capability. A composed item may be transmitted over the wireless network 1000 through the communication subsystem 24.

For voice communications, the overall operation of the portable electronic device 20 is substantially similar, except that the received signals are output to the speaker 44, and signals for transmission are generated by the microphone 46. Alternative voice or audio I/O subsystems, such as a voice message recording subsystem, can also be implemented on the portable electronic device 20. Although voice or audio signal output is accomplished primarily through the speaker 44, the display 32 can also be used to provide additional information such as the identity of a calling party, duration of a voice call, or other voice call related information.

A method of detecting the use of an unauthorized battery pack in a portable electronic device will now be described. As noted above, the battery pack 58 for a portable electronic device contains one or more rechargeable batteries or battery cells, and associated control circuitry. The battery pack has a form factor and contact arrangement suited to the particular portable electronic device. An unauthorized battery pack, contrasted to an authorized battery pack, is a battery pack that has not been authorized for use, typically by the original equipment manufacturer or a recognized standards authority, in a given portable electronic device. Unauthorized battery packs may be battery packs manufactured by, or for, other original equipment manufacturers, or may be counterfeit battery packs manufactured by unlicensed or unregulated manufacturers. Unauthorized or counterfeit battery packs can pose substantial risk to both the device and the user.

Embodiments of the present method can be represented as a software product stored in a machine-readable medium (also referred to as a computer-readable medium, a processor-readable medium, or a computer usable medium having a computer-readable program code embodied therein). The machine-readable medium can be any suitable tangible medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment of the invention. Those of ordinary skill in the art will appreciate that other instructions and operations necessary to implement the described invention can also be stored on the machine-readable medium. Software running from the machine-readable medium can interface with circuitry to perform the described tasks.

The method comprises monitoring a temperature profile of a battery in a battery pack during an operation of the portable electronic device. The temperature profile is determined in accordance with outputs sensed at temperature monitoring terminals of the battery pack. If the temperature profile is determined to be atypical, an indication is provided that the battery pack is an unauthorized battery pack. According to one embodiment, the present description describes a method of controlling charging of a portable electronic device. The method comprises monitoring a temperature profile of a battery in a battery pack connected to the portable electronic device during a charging operation, and controlling the charging operation in response to detecting an atypical variation in the temperature profile, or detecting that the temperature profile is inconsistent with predetermined temperature characteristics of an authorized battery pack. For example, if the temperature profile does not show an expected temperature rise during a charging operation, a visual indication can be provided advising that the battery pack is unauthorized or defective. The indication can also trigger the control of charging or discharging operations of the portable electronic device. For example, charging can be terminated or the device shut down to avoid a potentially catastrophic thermal runaway event. The device can also be operated in a safe, or reduced power, mode in response to the indication.

A portable electronic device for implementing the method is also described. The portable electronic device comprises a temperature monitoring system to monitor a temperature profile of a battery contained within a battery pack during an operation of the portable electronic device. The temperature profile is determined in accordance with outputs sensed at temperature monitoring terminals of the battery pack. The internal temperature sensing circuit can, for example, comprise a resistive element. The temperature profile can be determined in accordance with voltages sensed across the resistive element by the temperature monitoring system. The portable electronic device also comprises functional components, including a processor connected to the temperature monitoring system, and a memory for storage of computer-readable program code executable by the processor to provide an indication that the battery pack is an unauthorized battery pack in response to determining that the temperature profile is atypical.

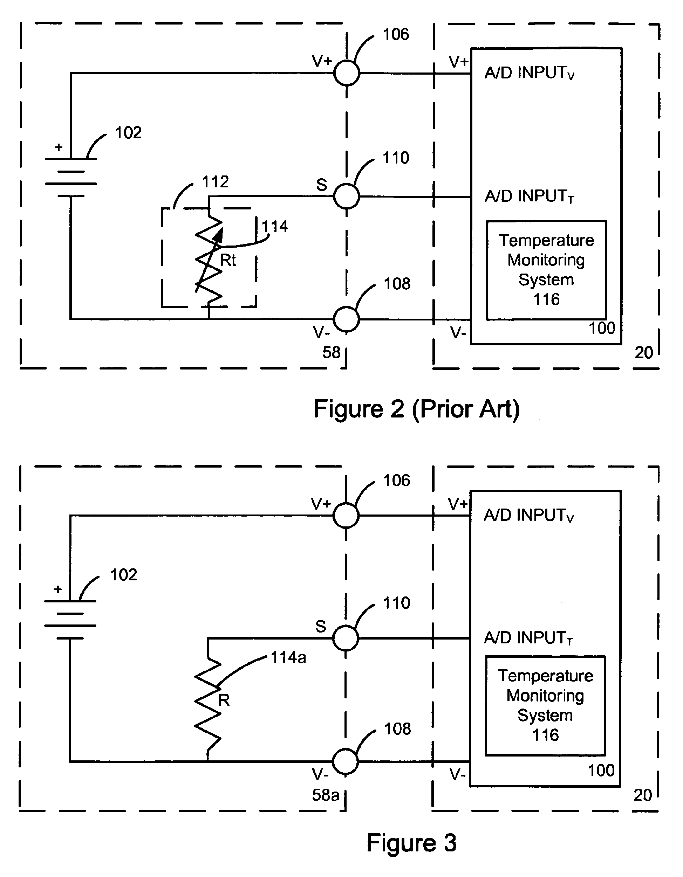

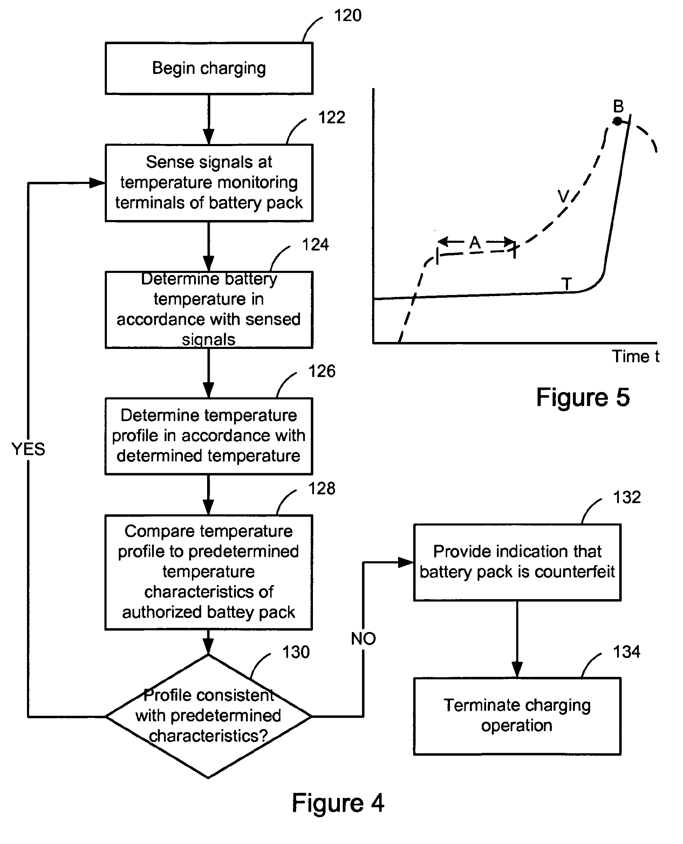

Reference is now made to Figure 2, which shows a block diagram of an exemplary portable electronic device 20 including a conventional battery charging system. The portable electronic device 20 includes a charging system 100 for charging battery cells 102 packaged within an authorized or authentic battery pack 58. The battery pack 58 includes three battery charging contacts: first battery contact 106, second battery contact 108, and third battery contact 110. Battery contact 106 is the V+ (positive) terminal for battery 102. Battery contact 108 is the V- or ground terminal. Battery contact 110 is the S or sensing terminal. Figure 5 illustrates typical voltage and temperature curves of a battery during charging. These curves are idealized, and are not intended to represent the characteristics of any particular battery. As shown in the voltage curve V, the voltage of the battery typically does not increase linearly. Instead, the battery voltage increases until an area A is reached, where the battery voltage increases slowly. The battery voltage then rapidly increases until a voltage peak B is reached. Full charge of the battery occurs just before voltage peak B. If the charging process were not terminated, the battery would then be overcharged, possibly damaging the battery. As shown in the voltage curve V, the battery voltage also decreases when the battery is overcharged. During the charging process, the battery temperature also varies. Figure 5 shows a typical temperature curve T for a battery being charged, when the battery temperature before charging is around room temperature. As indicated in temperature curve T, the battery temperature begins to rise rapidly around or after the area A is reached. The temperature then continues to increase until the charging process is terminated.

As shown in Figure 2, the battery cells 102 are coupled between the battery contacts 106 and 108. In addition, coupled between battery contacts 108 and 110 is a temperature sensing circuit or system 112. The internal temperature sensing system 112 includes a temperature-sensitive element 114. In the illustrated example, the temperature-sensitive element 114 is a thermistor Rₜ. The thermistor Rₜ can be a negative temperature co-efficient (NTC) thermistor where the resistance decreases with temperature, or a positive temperature co-efficient (PTC) thermistor, where the resistance increases with temperature. Persons skilled in the art will recognize that other temperature-sensitive components, such as capacitors or circuits, can be used to provide a signal representative of the battery temperature.

The temperature sensing system 112 allows the battery temperature to be monitored by a temperature monitoring system 116 in the portable electronic device 20. The temperature monitoring system 116 can be integrated with the charging system 100, as shown, or can be implemented separately or as part of the battery interface 56 (see Figure 1). The charger 20 includes positive and negative (V+ and V-) terminals that are coupled to battery 102 via battery contacts or terminals 106 and 108. The positive terminal 106 can also act as an analog/digital input A/D INPUT_{V}, in order to detect the battery voltage. In addition, the charger 100 includes an analog/digital input A/D INPUT_{T}, which is coupled to battery 102 via the third battery contact or sensing (S) terminal 110. The terminals 106, 108 and 110 comprise the temperature monitoring terminals of the battery pack.

Since, as is well known to anyone of skill in the art, the voltage (V) developed across the temperature sensitive element 114 is directly related to its resistance (Rₜ) according to the relationship V=IRₜ, by sensing the voltage between negative terminal 108 and the sensing terminal 110, the temperature monitoring system 116 can determine or calculate the resistance of the temperature-sensitive element 114 in accordance with the charging current, and, hence, the temperature of the battery pack based on the known relationship between temperature and resistance for the particular temperature-sensitive element. By periodically sensing the voltage across terminals 108 and 110, the temperature monitoring system can build or determine a temperature profile for the battery pack that can be compared to predetermined or accepted temperature characteristics for such a battery pack. The temperature profile for the battery pack can, for example, include the sensed starting temperature, the rate of change of temperature over time (dT/dt), and/or values representing the temperature of the battery pack at each sensing time. Similarly, the predetermined temperature characteristics can be typical or characteristic temperature values or ranges for the particular make and model of battery pack, and can include, for example, thermal safety cut-off values set in accordance with industry safety standards, and accepted or expected rates of change of temperature (dT/dt), as determined by the battery pack manufacturer or the manufacturer of the portable electronic device. If the temperature profile determined by the temperature monitoring system 116 is consistent with (i.e. falls within the specified ranges, or is within accepted tolerances of the values of) the predetermined temperature characteristics, the temperature monitoring system 116 can determine that the battery is operating correctly.

The temperature monitoring system 116 of the portable electronic device 20 can be implemented in hardware, software, or firmware, or a combination thereof, to sense and monitor battery temperature. The temperature monitoring system 116 can include, or be integrated with, control functions that control the charging or discharging current, initiate charging or discharging, or terminate an operation upon detection of an unsafe operating condition. Similarly, the temperature sensing system 112 of the battery pack 58 can combine hardware components (e.g. the temperature-sensitive element), and software or firmware components.

In operation, the charging system 100 sends a current into the battery, in order to recharge the battery. The temperature monitoring system 116, via the A/D inputs, obtains the original, or starting, battery pack temperature, and determines and stores the battery pack temperature at periodic or other intervals, as determined by a comparison between the voltage sensed across the thermistor Rₜ and the voltage across the battery 102. Based on the temperature values so determined, the temperature monitoring system 116, or other processing system, can determine the temperature profile for the battery 102 as it is being charged, and can monitor this profile. As is known, charging of the battery 102 can be controlled in response to this temperature profile. For example, charging can be terminated if a predetermined thermal safety cut-off value is reached, or the rate of change of temperature (dT/dt) can be used to control the charging current applied to the battery 102. For example, for a Lithium-Ion battery operation charging is terminated if the temperature rises above 45 degrees Celsius or falls below 0 degrees Celsius. The temperature monitoring system 116 can also monitor the temperature of the battery 102 during normal operation of the portable electronic device 20 (i.e. discharge) to ensure that the battery temperature is not outside normal operating temperature ranges.

It has been found that, to save on manufacturing cost, many counterfeit or unauthorized battery packs omit the temperature sensing system 112 from the battery pack, or modify the system 112 to reduce cost. Many of the counterfeit battery packs use a fixed resistor in place of the temperature-sensitive element 114. An example of such as counterfeit battery back 58a is shown in Figure 3. The temperature sensing system 112, including the temperature-sensitive element 114, has been replaced by a fixed resistor 114a (R). As will be apparent, omitting the temperature sensing system can pose risks. Since the temperature coefficient of a fixed resistor is very small, the voltage across the fixed resistor 114a is dependent primarily on the charging current, and (assuming a constant charging current) the temperature monitoring system 116 will observe an incorrect, and substantially constant, temperature. Thus the temperature monitoring system 116 has no way to accurately determine the temperature of the battery 102. Due to this deliberate modification to the sensing circuitry, and without an accurate method of monitoring temperature, the battery 102 can get into a thermal runaway event causing a fire or explosion.

This present method and system detects such an unauthorized or counterfeit battery pack by comparing the temperature values, as determined by the temperature monitoring system 116, to the expected or predetermined characteristics of an authorized battery pack, such as an expected temperature increase, or a predetermined charging temperature curve. For most rechargeable battery cells there is also a spike in the cell temperature as the battery reaches its full charge. For example, when a Lithium-Ion battery is being charged at a high rate, there is an expected rise in temperature of 3-4 degrees Celsius in the battery cell. Such an expected spike can be included in the predetermined characteristics, and if no such temperature increase is observed when high rate charging is applied, the charging operation can be terminated or the device disabled, and a notification or indication provided that the battery pack is potentially counterfeit or damaged.

A flowchart of an embodiment of the present invention is shown in Figure 4. The embodiment is directed to charging scenario in which the charging system 100, shown in Figures 2 and 3, is activated to charge a battery 102. Charging of the battery begins at step 120. The temperature monitoring system 116 then monitors a temperature profile of the battery by performing steps 122 - 128 one or more times. The temperature monitoring system 116, via the analog/digital inputs A/D INPUT_{V} and A/D INPUT_{T}, samples or senses signals at the terminals 106 and 110 of the battery pack 58a representing the voltages across the battery 102 and the temperature sensitive resistor 114 or resistor 114a (step 122), and determines a battery temperature in accordance with the sensed signals (step 124). The determined battery temperature, which, depending on whether the battery pack is an authorized pack or a counterfeit pack in which the temperature sensing circuit 112 has been omitted or modified, may or may not reflect the actual battery temperature. In accordance with, or based on, the determined battery temperature, as calculated at step 124, a temperature profile can be determined (step 126). The number of temperature values determined, and the processing of the temperature values to create the temperature profile, are matters of design choice and implementation that will depend on, for example, the sophistication of the battery pack intended for use in the portable device 20, the predetermined operating characteristics a battery pack authorized for use in the portable device, and the storage resources available.

At step 128 the temperature profile is compared to the predetermined temperature characteristics for battery pack(s) authorized for use within the portable electronic device 20. The comparison performed at step 128 will determine whether the temperature profile of the battery pack is consistent with the predetermined temperature characteristics, such as expected variations in the battery temperature over time during a charging operation. If the profile is consistent with the predetermined temperature characteristics (step 130), such as being within acceptable tolerances, the method returns to step 122 and the temperature profile continues to be monitored at periodic intervals; otherwise, the method proceeds to step 132. For example, if the expected temperature profile shows that a rise in temperature of 3 degrees Celsius is expected, a sensed rise in temperature of 2.5 - 3.5 degrees Celsius would be considered consistent, but values outside this range would be considered inconsistent. If the sensed temperature profile is consistent with the predetermined temperature characteristics, the method returns to step 122. The length of the intervals is again a matter of design choice and implementation detail.

If the sensed temperature profile and the predetermined temperature characteristics are not consistent, the battery pack is presumed to be unauthorized, counterfeit, or defective. To avoid a thermal runaway or other unsafe condition, the method can provide an indication that the battery pack is unauthorized or defective (step 132), and can terminate the charging operation upon detection of an unauthorized battery pack (step 134). The indication is a signal generated by the temperature monitoring system 116 that can cause the portable electronic device to display a message to the user, sound an audible alarm, and/or control other functions within the portable electronic device. For example, while termination of the charging operation is preferred, it also possible to limit the charging current, or otherwise control the charging operation to ensure that the battery is operated in a safe manner. Upon detection of an unauthorized battery pack, the portable electronic device 20 can also be controlled to operate at a reduced power level to ensure that the battery temperature does not go outside normal operating temperature ranges.

The described method and system have a low implementation cost, since the existing temperature monitoring system can be used to sense the temperature values at the battery pack, and limited processing is required to compare the sensed characteristics to those expected in an authorized battery. By detecting batteries in which safety features, such as the temperature sensing thermistor, have been altered or omitted, portable electronic devices, and their users, can avoid the consequences of catastrophic battery failure, such as explosion due to a thermal runaway, or other damage to the device.

While the embodiments described herein are directed to particular implementations of the portable electronic device and the method of remotely managing media on the portable electronic device, it will be understood that modifications and variations may occur to those skilled in the art within the scope of the appended claims.

## Claims

1. A method of detecting an unauthorized battery pack in a portable electronic device (20), comprising:
monitoring a temperature profile of a battery (102) during charging or discharging of the portable electronic device, the temperature profile determined in accordance with outputs periodically sensed at temperature monitoring terminals (106, 108, 110) of a battery pack (58) containing the battery; and **characterized in**
providing an indication that the battery pack is an unauthorized battery pack in response to determining that the temperature profile is not within accepted tolerances of predetermined temperature characteristics associated with an authorized battery pack.

2. The method of claim 1, further comprising controlling charging or discharging of the portable electronic device in response to the indication.

3. The method of claim 2 or claim 3, wherein controlling the operation of the portable electronic device comprises any of: terminating a charging operation; disabling the portable electronic device; operating the portable electronic device in a safe mode; or operating the portable electronic device at a reduced power level.

4. The method of any one of the preceding claims, wherein the battery pack comprises a resistive element (114, 114a), and the temperature profile is determined in accordance with voltages sensed across the resistive element.

5. The method of any one of the preceding claims, wherein determining that the temperature profile is not within accepted tolerances of the predetermined temperature characteristics for an authorized battery pack comprises determining that an expected temperature rise is absent.

6. A portable electronic device, comprising a temperature monitoring system (116), functional components comprising a processor (22) connected to the temperature monitoring system, and a memory (28, 30) for storage of computer-readable program code executable by the processor for causing the portable electronic device to implement the steps of the method of any one of claims 1 to 5.

7. A computer-readable medium having computer-readable code embodied therein for execution by a processor (22) of the portable electronic device for causing said portable electronic device to implement the steps of the method of any one of claims 1 to 5.

## Patentansprüche

1. Verfahren zum Erfassen eines nicht zugelassenen Batteriesatzes in einer tragbaren elektronischen Vorrichtung (20), mit:
Überwachen eines Temperaturprofils einer Batterie (102) während des Ladens oder Entladens der tragbaren elektronischen Vorrichtung, wobei das Temperaturprofil nach Maßgabe von Ausgaben bestimmt wird, die in regelmäßigen Abständen an Temperaturüberwachungsanschlüssen (106, 108, 11) eines die Batterie enthaltenden Batteriesatzes (58) gemessen werden; und **gekennzeichnet durch**
Vorsehen einer Angabe, dass der Batteriesatz ein nicht zugelassener Batteriesatz ist, als Reaktion auf die Bestimmung, dass das Temperaturprofil nicht innerhalb angenommener Toleranzen vorgegebener Temperatureigenschaften liegt, die mit einem zugelassenen Batteriesatz verknüpft sind.

2. Verfahren nach Anspruch 1, weiterhin mit dem Steuern des Ladens oder Entladens der tragbaren elektronischen Vorrichtung als Reaktion auf die Angabe.

3. Verfahren nach Anspruch 2 oder 3, wobei das Steuern des Betriebs der tragbaren elektronischen Vorrichtung irgendeines von: Beenden eines Ladevorgangs; Deaktivieren der tragbaren elektronischen Vorrichtung; Betreiben der tragbaren elektronischen Vorrichtung in einem abgesicherten Modus; oder Betreiben der tragbaren elektronischen Vorrichtung auf einem verringerten Leistungspegel umfasst.

4. Verfahren nach irgendeinem der vorhergehenden Ansprüche, wobei der Batteriesatz ein Widerstandselement (114, 114a) umfasst und das Temperaturprofil nach Maßgabe von Spannungen bestimmt wird, die am Widerstandselement gemessen werden.

5. Verfahren nach irgendeinem der vorhergehenden Ansprüche, wobei das Bestimmen, dass das Temperaturprofil nicht innerhalb angenommener Toleranzen der vorgegebenen Temperatureigenschaften für einen zugelassenen Batteriesatz liegt, das Bestimmen umfasst, dass ein erwarteter Temperaturanstieg fehlt.

6. Tragbare elektronische Vorrichtung mit einem Temperaturüberwachungssystem (116), Funktionskomponenten, die einen mit dem Temperaturüberwachungssystem verbundenen Prozessor (22) umfassen, und einem Speicher (28, 30) zum Speichern eines computerlesbaren Programmcodes, der von dem Prozessor ausgeführt werden kann, um die tragbare elektronische Vorrichtung zu veranlassen, die Schritte des Verfahrens nach irgendeinem der Ansprüche 1 bis 5 umzusetzen.

7. Computerlesbares Medium mit einem in dieses integrierten computerlesbaren Code zur Ausführung durch einen Prozessor (22) der tragbaren elektronischen Vorrichtung, um die tragbare elektronische Vorrichtung zu veranlassen, die Schritte des Verfahrens nach irgendeinem der Ansprüche 1 bis 5 umzusetzen.

## Revendications

1. Procédé de détection d'un bloc-batterie non autorisé dans un dispositif électronique portable (20), comprenant le fait :
de surveiller un profil de température d'une batterie (102) pendant le chargement ou le déchargement du dispositif électronique portable, le profil de température étant déterminé suivant des sorties détectées périodiquement au niveau de bornes de surveillance de température (106, 108, 110) d'un bloc-batterie (58) contenant la batterie ; et **caractérisé par**
la fourniture d'une indication que le bloc-batterie est un bloc-batterie non-autorisé en réponse à la détermination que le profil de température ne se trouve pas dans les tolérances acceptées des caractéristiques de température prédéterminées associées à un bloc-batterie non-autorisé.

2. Procédé de la revendication 1, comprenant en outre la commande de chargement ou de déchargement du dispositif électronique portable en réponse à l'indication.

3. Procédé de la revendication 2 ou 3, dans lequel la commande du fonctionnement du dispositif électronique portable comprend l'une des étapes qui consistent : à terminer une opération de chargement ; à désactiver le dispositif électronique portable ; à faire fonctionner le dispositif électronique portable dans un mode sans échec ; ou à faire fonctionner le dispositif électronique portable à un niveau de puissance réduit.

4. Procédé de l'une quelconque des revendications précédentes, dans lequel le bloc-batterie comprend un élément résistif (114, 114a), et le profil de température est déterminé suivant des tensions détectées aux bornes de l'élément résistif.

5. Procédé de l'une quelconque des revendications précédentes, dans lequel le fait de déterminer que le profil de température ne se trouve pas dans les tolérances acceptées des caractéristiques de température prédéterminées pour un bloc-batterie autorisé comprend la détermination de l'absence d'une augmentation de température prévue.

6. Dispositif électronique portable, comprenant un système de surveillance de température (116), des composants fonctionnels comprenant un processeur (22) connecté au système de surveillance de température, et une mémoire (28, 30) pour le stockage d'un code de programme lisible par ordinateur pouvant être exécuté par le processeur pour amener le dispositif électronique portable à mettre en oeuvre les étapes du procédé de l'une quelconque des revendications 1 à 5.

7. Support lisible par ordinateur ayant un code lisible par ordinateur qui y est incorporé pour une exécution par un processeur (22) du dispositif électronique portable afin d'amener ledit dispositif électronique portable à mettre en oeuvre les étapes du procédé de l'une quelconque des revendications 1 à 5.
